# EUROPEAN PATENT APPLICATION

(11) **EP 4 582 400 A1**
(43) Date of publication of application: **09.07.2025**
(21) Application number: 23860442.5
(22) Date of filing: 30.08.2023
(51) Int. Cl.: C04B 28/26, B28B 11/24, C04B 12/04, C04B 14/10, C04B 18/14, C04B 22/06, C04B 22/08, C04B 40/02

(54) **GEOPOLYMER COMPOSITION, PRODUCTION METHOD THEREFOR, AND CONCRETE STRUCTURE**

(30) Priority: 31.08.2022 JP 2022137976
(71) Applicant: IHI Corporation, Tokyo 135-8710 (JP); IHI Construction Materials Co., Ltd., Tokyo 130-0026 (JP)
(72) Inventor: KISAKU Tomoaki, Tokyo 135-8710 (JP); CHINEN Shigemitsu, Tokyo 130-0026 (JP); KOMORI Teruo, Niigata-shi Niigata 950-3102 (JP); YAMAMURA Yuki, Tokyo 135-8710 (JP); ITO Mitsutomo, Tokyo 130-0026 (JP); SAITO Yukiko, Niigata-shi Niigata 950-3102 (JP); JING Nie, Tokyo 135-8710 (JP); KURATA Yukihiro, Tokyo 130-0026 (JP); MARUYAMA Hayato, Niigata-shi Niigata 950-3102 (JP); ISOBE Miki, Niigata-shi Niigata 950-3102 (JP); KASAHARA Kenji, Niigata-shi Niigata 950-3102 (JP)
(74) Representative: TBK
(86) International application number: PCT/JP2023/031620
(87) International publication number: WO 2024/048680

(57) **Abstract**

Disclosed herein are a geopolymer composition always having acid resistance superior to that of cement concrete, a method for producing the same, and a concrete structure.

The geopolymer composition stably having high acid resistance is obtained by setting a molar ratio of a total of sodium and potassium to aluminum ((Na+K)/Al) in the entire geopolymer composition to more than 0.5 and 1.4 or less, setting a molar ratio of silicon to aluminum (Si/Al) in the entire geopolymer composition to more than 1.5 and 2.8 or less, and setting a molar ratio of water to alumina (H₂O/Al₂O₃) in the entire geopolymer composition to 15 or less.

## Description

### TECHNICAL FIELD

The present invention relates to a geopolymer composition for use in forming a structure in, for example, civil engineering or construction, a method for producing the same, and a concrete structure.

### BACKGROUND ART

Conventionally, in civil engineering, construction, and the like, structures have generally been formed using concrete or mortar. However, geopolymer compositions have received attention in recent years as an alternative material to concrete or mortar, and the application of geopolymer concrete to various structures such as railroad ties and wall materials for buildings has been examined.

A geopolymer composition is a solidified body obtained by mixing and reacting an alkali-active amorphous powder (active filler) such as fly ash (coal ash), metakaolin, and blast furnace slag, with an alkali solution for activating it (an aqueous sodium silicate solution, an aqueous potassium silicate solution, an aqueous sodium hydroxide solution, an aqueous potassium hydroxide solution). Similarly to cement concrete, geopolymer concrete develops strength comparable to that of cement concrete by adding fine aggregate, coarse aggregate, and the like (see Table 1).

**[Table 1]**

| Quantity of material per unit volume of concrete (kg/m3) | | | | | | |
|---|---|---|---|---|---|---|
| FA | BS | KOH | SiO₂ | Water | Fine aggregate | Coarse aggregate |
| 456 | 24 | 140 | 47 | 109 | 659 | 850 |
| | | Produced water glass = 296 | | | | |

It should be noted that in Table 1, FA denotes JIS Type-I fly ash, BS denotes blast furnace slag fine powder (Blaine's value: 4000 cm²/g), and produced water glass is produced by mixing and dissolving KOH and SiO₂ in water.

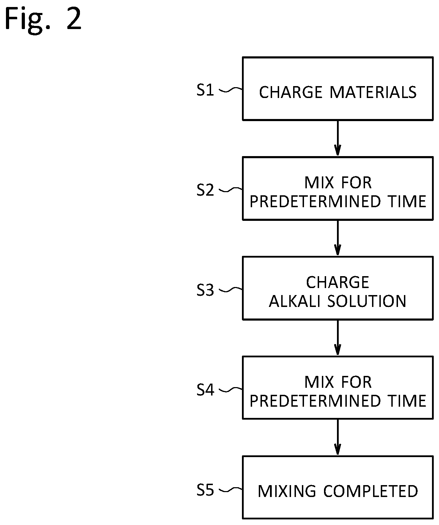

Generally, as shown in Figure 2, geopolymer concrete is conventionally produced by first charging materials such as a powder (active filler) such as coal ash, blast furnace slag, and metakaolin and aggregate (fine aggregate, coarse aggregate) into a mixer (S1), stirring the resultant for a predetermined time (e.g., 2 minutes) (S2), then adding an alkali solution such as water glass (S3), mixing the resultant in the mixer for a predetermined time (e.g., 5 minutes) (S4), and completing the mixing. Then, the mixed product is poured into a formwork, cured for several hours, and then demolded after hardening to form a structure (see, for example, Patent Literature 1).

Geopolymer compositions are free from calcium and are therefore characterized by higher acid resistance than cement. For example, geopolymer compositions are used as a material for sidewalk/roadway boundary blocks in hot spring towns.

### CITATION LIST

### PATENT LITERATURE

Patent Literature 1: Japanese Patent No. 5091519

### SUMMARY OF INVENTION

### TECHNICAL PROBLEM

As described above, geopolymer compositions are known to have higher acid resistance than cement, but may not have acid resistance superior to that of cement concrete depending on a combination of its composition, raw material conditions, aggregate compounding conditions, etc. This causes a problem that some of geopolymer compositions are not suitable for structures required to have acid resistance.

In light of such a problem, it is an object of the present invention to provide a geopolymer composition always having acid resistance superior to that of cement concrete, a method for producing the same, and a concrete structure.

### SOLUTION TO PROBLEM

In order to achieve the above object, the present invention is directed to a geopolymer composition containing, as a raw material, an active filler and an alkali activator, wherein a molar ratio of a total of sodium and potassium to aluminum ((Na+K)/Al) in the entire geopolymer composition is more than 0.5 and 1.4 or less, a molar ratio of silicon to aluminum (Si/Al) is more than 1.5 and 2.8 or less, a weight ratio of all aggregate to a geopolymer slurry is 0.6 or more and a closest-packing ratio of fine aggregate is higher than that of coarse aggregate, and a molar ratio of water to alumina (H₂O/Al₂O₃) in the entire geopolymer composition is 15 or less.

A test performed by the present inventor confirmed that such a geopolymer composition stably has high acid resistance.

Further, in order to achieve the above object, the present invention is also directed to a method for producing the geopolymer composition described above, the method including performing heat curing at an accumulated temperature (temperature × time) of 180°C·Hr or higher in an environment of 50°C or higher or heat curing at an accumulated temperature of 14400°C·Hr or higher or for 30 days or longer in an environment of lower than 50°C. A test performed by the present inventor confirmed that a geopolymer composition produced by such a production method has high acid resistance even at a young material age.

Further, in order to achieve the above object, the present invention is directed to a concrete structure using the geopolymer composition described above, the concrete structure including: a portion formed of the geopolymer composition, which is to be brought into contact with an acid solution; and a portion formed of cement concrete, which is not to be brought into contact with an acid solution.

In this case, only the portion to be brought into contact with an acid solution is formed using the geopolymer composition, which makes it possible to minimize the amount of the acid-resistant geopolymer composition to be used.

### ADVANTAGEOUS EFFECTS OF INVENTION

The geopolymer composition of the present invention always and stably has high acid resistance, and therefore its lifetime in an acid environment is longer than that of a conventional cement concrete composition or geopolymer concrete having unstable acid resistance, which makes it possible to reduce the frequency of replacement or repair of structures. This makes it possible to reduce environmental load, working hours, and costs due to a reduction in the amounts of materials to be used. Further, a reduction in corrosion allowance makes it possible to reduce not only time and cost required for drilling work at a product installation site but also material costs.

Further, the geopolymer composition of the present invention can have high acid resistance even at a young material age, which makes it possible to reduce a work period.

Further, the concrete structure using the geopolymer composition of the present embodiment makes it possible to minimize the amount of the acid-resistant geopolymer composition to be used, which makes it possible to reduce the cost of the entire concrete structure.

### BRIEF DESCRIPTION OF DRAWINGS

Figure 1 is a diagram showing production steps of a geopolymer composition according to an embodiment of the present invention.
Figure 2 is a diagram showing production steps of a conventional geopolymer composition.

### DESCRIPTION OF EMBODIMENTS

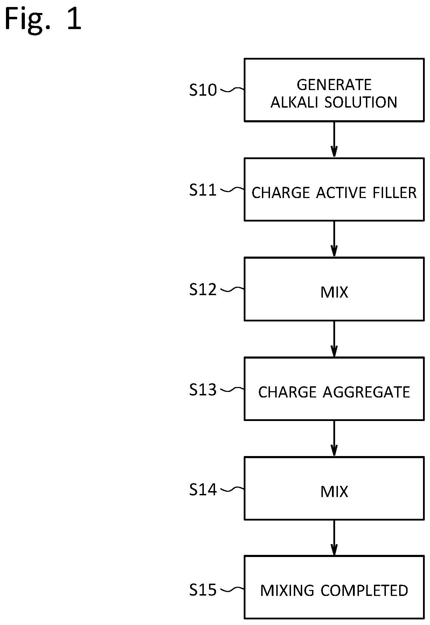

Figure 1 shows, as an embodiment of the present invention, a method for producing a geopolymer composition for use as a structure in, for example, civil engineering or construction.

A geopolymer composition of the present embodiment contains, as a raw material, an active filler, an alkali activator, and aggregate, and is formed by adding an active filler to an alkali solution obtained by mixing an alkali activator and water, mixing the resultant, adding aggregate thereto, and mixing the resultant.

The active filler is a powder activated and solidified by mixing with an alkali activator, and is composed of, for example, an alkali-active amorphous powder, such as fly ash (coal ash), metakaolin, and blast furnace slag.

The alkali activator is a powder of potassium silicate, sodium metasilicate, sodium hydroxide, potassium hydroxide, or the like.

The aggregate is composed of sand, gravel, artificial aggregate, or the like, and is classified into fine aggregate and coarse aggregate according to the size of particles.

Hereinbelow, the method for producing a geopolymer composition of the present embodiment will be described with reference to Figure 1.

First, an alkali solution is generated by melting an alkali activator in water (S10). Then, an active filler is charged into the alkali solution generated in step S10 (S11), and the resultant is mixed in a mixer to form a geopolymer slurry (S12). Then, aggregate is charged into the geopolymer slurry formed in step S12 (S13), the resultant is mixed in the mixer (S14), the mixing is completed (S15), and the resultant is poured into a formwork and hardened by heat curing at a temperature higher than 45°C (preferably 60°C) for 24 hours (preferably 68 hours) or longer to form geopolymer concrete.

In this case, (1) the molar ratio of the total of sodium and potassium to aluminum ((Na+K)/Al) in the entire geopolymer composition is set to more than 0.5 and 1.4 or less, (2) the molar ratio of silicon to aluminum (Si/Al) is set to more than 1.5 and 2.8 or less, and (3) the molar ratio of water to alumina (H₂O/Al₂O₃) in the entire geopolymer composition is set to 15 or less. A test performed by the present inventor confirmed that such a geopolymer composition stably has high acid resistance.

Further, after the mixing of raw materials, the geopolymer composition is subjected to heat curing at an accumulated temperature of 180°C·Hr or higher in a temperature environment of 50°C or higher or heat curing at an accumulated temperature of 14400°C·Hr or higher or for 30 days in a temperature environment of lower than 50°C. A test performed by the present inventor confirmed that such a geopolymer composition has high acid resistance even at a young material age of 10 days or shorter.

As described above, the geopolymer composition of the present embodiment always and stably has high acid resistance by satisfying the above requirements (1) to (3), and therefore its lifetime in an acid environment is longer than that of a conventional cement concrete composition or geopolymer concrete having unstable acid resistance, which makes it possible to reduce the frequency of replacement or repair of structures. This makes it possible to reduce environmental load, work hours, and costs due to a reduction in the amounts of materials to be used. Further, a reduction in corrosion allowance makes it possible to reduce not only time and cost required for drilling work at a product installation site but also material costs.

Further, heat curing performed after the mixing of raw materials makes it possible for the geopolymer composition to have high acid resistance even at a young material age, thereby reducing a work period.

Further, when a concrete structure is formed using the geopolymer composition of the present embodiment to have a portion formed of the geopolymer composition, which is to be brought into contact with an acid solution and a portion formed of relatively inexpensive cement concrete, which is not to be brought into contact with an acid solution, the amount of the acid-resistant geopolymer composition to be used can be minimized, which makes it possible to reduce the cost of the entire concrete structure.

It should be noted that the above embodiment is an example of the present invention, and the present invention is not limited to the above embodiment.

### EXAMPLES

Hereinbelow, Examples 1 to 6 of the present invention and Comparative Examples 1 and 2 will be shown. It should be noted that the present invention is not limited to these examples.

### [Used materials]

In geopolymer compositions (concrete solidified bodies) of Examples 1 to 6 and Comparative Example 1, metakaolin and silica fume were used as a binder (active filler) and fine aggregate and coarse aggregate were used as aggregate.

In geopolymer compositions (paste solidified bodies) of Examples 7 to 11 and Comparative Example 2, used metakaolin and silica fume were used as a binder (active filler).

Further, in Examples 1 to 11 and Comparative Examples 1 and 2, potassium silicate, sodium metasilicate, and sodium hydroxide were used as an alkali solution, and pure water was used as water.

### [Molar ratio between atoms]

In Examples 1 to 11 and Comparative Examples 1 and 2, Si/Al in Examples 1 to 4, 6, 7, and 9 to 11 and Comparative Examples 1 and 2 was set to 2.2, that in Example 5 was set to 2.8, and that in Example 8 was set to 1.8.

In Examples 1 to 11 and Comparative Examples 1 and 2, (Na+K) /Al in Examples 1, 2, 4, 5, 7, 10, and 11 and Comparative Examples 1 and 2 was set to 1, that in Examples 3 and 9 was set to 1.2, that in Example 6 was set to 0.6, and that in Example 8 was set to 0.8.

In Examples 1 to 11 and Comparative Examples 1 and 2, H₂O/Al₂O₃ in Examples 1 to 3, 6, 7, and 9 to 11 and Comparative Examples 1 and 2 was set to 10, that in Example 4 was set to 13, that in Example 5 was set to 12.4, and that in Example 8 was set to 11.6.

### [Ratio of aggregate]

In Examples 1 to 6 and Comparative Example 1, the weight ratio of all aggregate to a geopolymer slurry was all set to 0.70.

### [Heat-curing conditions]

The temperature of heat curing in Examples 1 to 10 was set to 60°C, that in Comparative Example 1 was set to 45°C, that in Example 11 was set to 20°C, and that in Comparative Example 2 was set to 30°C. The time of heat curing in Examples 1 to 10 and Comparative Examples 1 and 2 was set to 68 hours and that in Example 10 was set to 3 hours. In Example 11, a geopolymer slurry was left to stand at ordinary temperature (20°C).

### [Test age]

The test age in Examples 1 and 3 to 9 and Comparative Examples 1 and 2 was set to 10 days or shorter, that in Example 2 was set to 20 days or longer, that in Example 10 was set to 28 days, and that in Example 11 was set to 36 days.

### [Production method 1]

Geopolymer compositions (concrete solidified bodies) of Examples 1 to 6 and Comparative Example 1 were produced by a method according to the following steps (1) to (7) and were subjected to a performance test.
(1) Potassium silicate, sodium metasilicate, and sodium hydroxide were dissolved in pure water and the resultant was cooled to 20°C or lower.
(2) The cooled alkali solution obtained in step (1) and a binder (active filler) were mixed using a stand mixer.
(3) The geopolymer slurry obtained in step (2) and aggregate previously mixed without adding water are mixed using a pan-type mixer.
(4) The mixed geopolymer concrete is charged into a mold. Deaeration is performed.
(5) Sealed heat curing is performed in a thermostat.
(6) After natural cooling, room-temperature curing is performed until a test day.

### [Production method 2]

Geopolymer compositions (paste solidified bodies) of Examples 7 to 11 and Comparative Example 2 were produced by a method according to the following steps (1) to (5) and were subjected to a performance test.
(1) Potassium silicate, sodium metasilicate, and sodium hydroxide were dissolved in pure water and the resultant was cooled to 20°C or lower.
(2) The cooled alkali solution obtained in step (1) and a binder (active filler) were mixed using a stand mixer.
(3) The mixed geopolymer paste was charged into a mold. Deaeration is performed.
(4) Sealed heat curing is performed in a thermostat. (Only in Example 11, the geopolymer paste was left to stand at ordinary temperature.)
(5) Room-temperature curing is performed until a test day.

### [Test results]

The results of a sulfuric acid immersion test of Examples 1 to 6 and Comparative Example 1 and those of Examples 7 to 11 and Comparative Example 2 are respectively shown below in Table 2 and Table 3. The sulfuric acid immersion test was performed using a sample having a diameter of 50 mm and a thickness of 10 mm.

**[Table 2]**

| | Si/Al | Na+K / Al | H2O / Al2O3 | Ratio of fine aggregate | Ratio of all aggregate | Heating temperature [°C] | Heating time [h] | Material age at start of test | Compressive strength [Mpa] | Mass reduction ratio after 3-w 5wt% sulfuric acid immersion [wt%] |
|---|---|---|---|---|---|---|---|---|---|---|
| Example 1 | 2.2 | 1 | 10 | 0.43 | 0. 70 | 60 | 68 | 7 days | 75.2 | 7.8 |
| Example 2 | 2.2 | 1 | 10 | 0.43 | 0. 70 | 60 | 68 | 28 days | 81 | 5.5 |
| Example 3 | 2.2 | 1.2 | 10 | 0.43 | 0. 70 | 60 | 68 | 6 days | 98.2 | 5.8 |
| Example 4 | 2.2 | 1 | 13 | 0.43 | 0. 70 | 60 | 68 | 6 days | 51.6 | 4.5 |
| Example 5 | 2.8 | 1 | 12.4 | 0.43 | 0. 70 | 60 | 68 | 6 days | 26.1 | 6.2 |
| Example 6 | 2.2 | 0.6 | 10 | 0.43 | 0. 70 | 60 | 68 | 9 days | 72 | 5.7 |
| Comparative Example 1 | 2.2 | 1 | 10 | 0.43 | 0. 70 | 45 | 68 | 6 days | 76.9 | 100 |

**[Table 3]**

| | Si/Al | Na+K / Al | H2O / Al2O3 | Ratio of fine aggregate | Ratio of all aggregate | Heating temperature [°C] | Heating time [h] | Material age at start of test | Compressive strength [Mpa] | Mass reduction ratio after 3-w 5 wt% sulfuric acid immersion [wt%] |
|---|---|---|---|---|---|---|---|---|---|---|
| Example 7 | 2.2 | 1 | 10 | 0 | 0 | 60 | 68 | 5days | 94.4 | 17.8 |
| Example 8 | 1.8 | 0.8 | 11.6 | 0 | 0 | 60 | 68 | 12days | 9.9 | 12.7 |
| Example 9 | 2.2 | 1.2 | 10 | 0 | 0 | 60 | 68 | 5days | 66.5 | 19.8 |
| Example 10 | 2.2 | 1 | 10 | 0 | 0 | 60 | 3 | 28days | 54.1 | 16.1 |
| Example 11 | 2.2 | 1 | 10 | 0 | 0 | 20 | 0 | 36days | 71.6 | 14.9 |
| Comparative Example 2 | 2.2 | 1 | 10 | 0 | 0 | 30 | 68 | 5days | 76.9 | 51.5 |

The test results confirmed that the geopolymer compositions of Examples 1 to 11 had higher acid resistance than cement concrete. Further, the results of Comparative Examples 1 and 2 indicated that even in the case of the geopolymer solidified body, its acid resistance was low when, in the case of a temperature environment of lower than 50°C, heat curing was not performed at an accumulated temperature of 14400°C·H or higher or for 30 days.

## Claims

1. A geopolymer composition comprising, as a raw material, an active filler and an alkali activator, wherein
a molar ratio of a total of sodium and potassium to aluminum ((Na+K)/Al) in the entire geopolymer composition is more than 0.5 and 1.4 or less,
a molar ratio of silicon to aluminum (Si/Al) in the entire geopolymer composition is more than 1.5 and 2.8 or less, and
a molar ratio of water to alumina (H₂O/Al₂O₃) in the entire geopolymer composition is 15 or less.

2. The geopolymer composition according to claim 1, wherein the raw material includes aggregate.

3. A method for producing a geopolymer composition, the method comprising:
after mixing the raw material, subjecting the geopolymer composition according to claim 1 or 2 to heat curing at an accumulated temperature of 180°C·Hr or higher in a temperature environment of 50°C or higher or heat curing at an accumulated temperature of 14400°C·Hr or higher or for 30 days or longer in a temperature environment of lower than 50°C.

4. A concrete structure using the geopolymer composition according to claim 1 or 2, comprising:
a portion formed of the geopolymer composition, which is to be brought into contact with an acid solution; and a portion formed of cement concrete, which is not to be brought into contact with an acid solution.
